# EUROPEAN PATENT SPECIFICATION

(11) **EP 1 754 393 B1**
(45) Date of publication and mention of the grant of the patent: **02.12.2020**
(21) Application number: 05729475.3
(22) Date of filing: 15.04.2005
(51) Int. Cl.: G06T 15/00, G06T 17/00, H04R 3/00

(54) **SYSTEM AND METHOD FOR USE IN CREATING AN AUDIO SCENE**
SYSTEM UND VERFAHREN ZUR VERWENDUNG BEI DER ERZEUGUNG EINER AUDIOSZENE
SYSTÈME ET MÉTHODE À UTILISER POUR LA CRÉATION D'UNE SCÈNE AUDIO

(30) Priority: 16.04.2004 AU 2004902027; 08.07.2004 AU 2004903760
(43) Date of publication of application: 21.02.2007
(73) Proprietor: Dolby Laboratories Licensing Corporation, San Francisco, CA 94103 (US)
(72) Inventor: BOUSTEAD, Paul, Andrew, Figtree, New South Wales 2525 (AU); SAFAEI, Farzad, Mt Keira, New South Wales 2500 (AU); DOWLATSHAHI, Mehran, Artarmon, New South Wales 2064 (AU)
(74) Representative: Dolby International AB Patent Group Europe
(86) International application number: PCT/AU2005/000534
(87) International publication number: WO 2005/101897

(56) References cited:
- WO-A1-01/33327
- WO-A1-01/46957
- WO-A1-01/85293
- GB-A- 2 349 055
- JP-A- 11 232 488
- JP-A- 2000 013 900
- JP-A- 2000 013 900
- US-A- 5 736 982

## Description

### FIELD OF THE INVENTION

The present invention relates generally to a system and a method for use in creating an audio scene, and has particular - but by no means exclusive - application for use in creating an audio scene for a virtual environment.

### BACKGROUND OF THE INVENTION

There have been significant advances in creating visually immersive virtual environments in recent years. These advances have resulted in the widespread uptake of massively multi-player role-playing games, in which participants can enter a common virtual environment (such as a battlefield) and are represented in the virtual environment by an avatar, which is typically in the form of an animated character. In the case of a virtual environment in the form of a battle field that avatar could be of a soldier.

The widespread uptake of visually immersive virtual environments is due in part to significant advances in image processing technology that enables highly detailed and realistic graphics virtual environment to be generated. The proliferation of three-dimensional sound cards provides the ability to supply participants in a virtual environment with high quality sound. However, despite the prolific use of three-dimensional sound cards today's visually immersive virtual environments are generally unable to provide realistic mechanisms for participants to communicate with each other. Many environments use non-immersive communication mechanisms such as text based chat or walkie-talkie style voice.

Document GB 2349055 A discloses a system for conducting a virtual audio-visual conference between two or more users comprising: a) two or more client stations each acting as a signal source and destination for each respective said user, having a user interface for audio-visual input and output including audio signal reception and generation means for receiving and generating audio signals; b) one or more servers; and c) a network coupling said client stations and said servers; wherein each said user is represented as a corresponding movable visual symbol displayed on said user interfaces of all coupled said client stations and said audio signal of all said users is generated at each said client station with an attenuation according to the spatial position of respective said symbols on said user interfaces.

### DEFINITIONS

The following provides definitions for various terms used throughout this specification:
- Weighted audio stream - audio information that comprises one or more pieces of audio information, each of which has an amplitude that is modified (increased or decreased) based on a distance between a source and recipient of the audio information.
- Unweighted audio stream - audio information that comprises one or more pieces of audio information, but unlike a weighted audio stream the amplitude of each piece of audio information in an unweighted audio stream is un-modified from the original amplitude.
- Audio Scene - audio information comprising combined sounds (for example, voices belonging to other avatars and other sources of sound within the virtual environment) that are spatially placed and perhaps attenuated according to a distance between a source and recipient of the sound. An audio scene may also comprise sound effects that represent the acoustic characteristics of the environment.

### SUMMARY OF THE INVENTION

According to a first aspect of the present invention there is provided a system according to claim 1.

The system according to the first aspect of the present invention has several advantages. One advantage is that by dividing the hearing range in to one or more portions, the fidelity of the audio scene can be adjusted to a required level. The greater the number of portions in the hearing range, the higher the fidelity of the audio scene. It is envisaged that the system is not restricted to a single weighted audio stream for one portion. The system is capable of multiple weighted audio streams each comprising audio from an object located in other portions of the hearing range. Another advantage of the system is that the weighted audio stream can replicate characteristics such as attenuation of the audio as a result of having to travel a distance between the object and the recipient. Yet another advantage of the present invention is that the audio stream can be reproduced as if it emanated from the location. Thus, if the datum indicated that the location of the object was to the right hand side of the recipient, the audio could be reproduced using the right channel of a stereo sound system.

An audio processor is : operable to create the weighted audio stream such that it comprises an unweighted audio stream that comprises audio from another object located in the portion of the hearing range of the avatar.

An advantage of including the unweighted audio stream in the weighted audio stream is that it provides a means for representing audio from one or more other objects that are located at the periphery of the portion of the hearing range of the avatar. An advantage of the unweighted audio stream is that it can be reused for creating audio scenes of many avatars, which can reduce the overall processing requirements for creating the audio scene.

The audio processor is operable to create the weighted audio stream in accordance with a predetermined mixing operation, the predetermined mixing operation comprising identification information that identifies the object and/or the other objects, and weighting information that can be used by the audio processor to set an amplitude of the audio and unweighted audio stream in the weighted audio stream.

The system further comprises a communication means operable to receive the audio, the unweighted audio stream and the mixing operation via a communication network, the communication means further being operable to send the weighted audio stream and the datum via the communication network.

Using the communication means is advantageous because it enables the system to be used in a distributed environment.

Preferably, the identifying means, the weighting means and the locating means are operable to respectively determine the identifier, the weighting and the location by processing a representation of the virtue environment.

Preferably, the identifying means is operable to determine the portion of the hearing range by:
selecting a first of a plurality of avatars in the virtual environment;
identifying a second of the plurality of avatars that is proximate the first of the avatars;
determining whether the second of the avatars can be included in an existing cluster;
including the second of the avatars in the existing cluster upon determining that it can be included therein;
creating a new cluster that includes the second of the avatars upon determining that the second of the avatars cannot be included in the existing cluster to thereby create a plurality of clusters;
determining an angular gap between two of the clusters;
creating a further cluster that is substantially located in the angular gap; and
including at least one of the avatars in the further cluster.

Alternatively, the identifying means is operable to determined the portion of the hearing range by:
selecting one of a plurality of avatars in the virtual environment;
determining a radial ray that extends from the avatar to the one of the plurality of avatars;
calculating the absolute angular distance that each of the plurality of avatars is from the radial ray;
arranging the absolute angular distance of each of the avatars into an ascending ordered list;
calculating a differential angular separation between successive ones of the absolute angular distance in the ascending ordered list;
selecting at least one of the differential angular separation that has a higher value than another differential angular separation; and
determining another radial ray that emanates from the avatar and which bisects two of the avatars that are associated with the at least one of the differential angular separation.

According to a second aspect of the present invention there is provided a method of creating an audio scene for an avatar in a virtual environment according to claim 12.

The step of creating the weighted audio stream is such that the weighted audio stream comprises an unweighted audio stream that comprises audio from another object located in the portion of the hearing range of the avatar.

The step of creating the weighted audio stream is carried out in accordance with a predetermined mixing operation, the predetermined mixing operation comprising identification information that identifies the object and/or the other objects, and weighting information that can be used by the audio processor to set an amplitude of the audio and unweighted audio stream in the weighted audio stream.

The method further comprises the steps of:
receiving the audio, the unweighted audio stream and the mixing operation via a communication network; and
sending the weighted audio stream and the datum via the communication network.

The method further comprises the following steps to determine the portion of the hearing range:
selecting a first of a plurality of avatars in the virtual environment;
identifying a second of the plurality of avatars that is proximate the first of the avatars;
determining whether the second of the avatars can be included in an existing cluster;
including the second of the avatars in the existing cluster upon determining that it can be included therein;
creating a new cluster that includes the second of the avatars upon determining that the second of the avatars cannot be included in the existing cluster to thereby create a plurality of clusters;
determining an angular gap between two of the clusters;
creating a further cluster that is located in the angular gap; and
including at least one of the avatars in the further cluster.

Alternatively, the method comprises the following steps to determine the position of the hearing range:
selecting one of a plurality of avatars in the virtual environment;
determining a radial ray that extends from the avatar to the one of the plurality of avatars;
calculating the absolute angular distance that each of the plurality of avatars is from the radial ray;
arranging the absolute angular distance of each of the avatars into an ascending ordered list;
calculating a differential angular separation between successive ones of the absolute angular distance in the ascending ordered list; and
selecting at least one of the differential angular separation that has a higher value than another differential angular separation; and
determining another radial ray that emanates from the avatar and which bisects two of the avatars that are associated with the differential angular separation.

According to a third aspect of the present invention there is provided a computer program comprising at least one instruction for causing a computing device to carry out the method according to claim 14.

According to a fourth aspect of the present invention there is provided a computer readable medium comprising the computer program according to claim 15.

### BRIEF DESCRIPTION OF THE DRAWINGS

Notwithstanding any other embodiments that may fall within the scope of the present invention, an embodiment of the present invention will now be described, by way of example only, with reference to the accompanying figures, in which:
figure 1 provides a block diagram of a system in accordance with the embodiment of the present invention;
figure 2 provides a flow chart of various steps performed by the system shown in figure 1;
figure 3 provides a flow chart of the steps involved in a grid summarisation algorithm used in the system shown in figure 1;
figure 4 illustrates a map used by the system shown in figure 1;
figure 5 illustrates a control table used by the system shown in figure 1;
figure 6 provides a flow chart of the steps involved in a cluster summarisation algorithm used in the system shown in figure 1;
figure 7 is an illustration of the clusters formed using the algorithm of figure 6;
figure 8 is a flow chart of the various steps involved in an alternative clustering algorithm;
figure 9 provides a visual depiction of the result of running the alternative clustering algorithm of figure 8 on the map shown in figure 4;
figure 10 illustrates another control table used by the system shown in figure 1;
figure 11 provides a flow chart of the steps involved in a process performed by the system shown in figure 1;
figure 12 provides a flow chart of the steps involved in a process performed by the system shown in figure 1.

### AN EMBODIMENT OF THE INVENTION

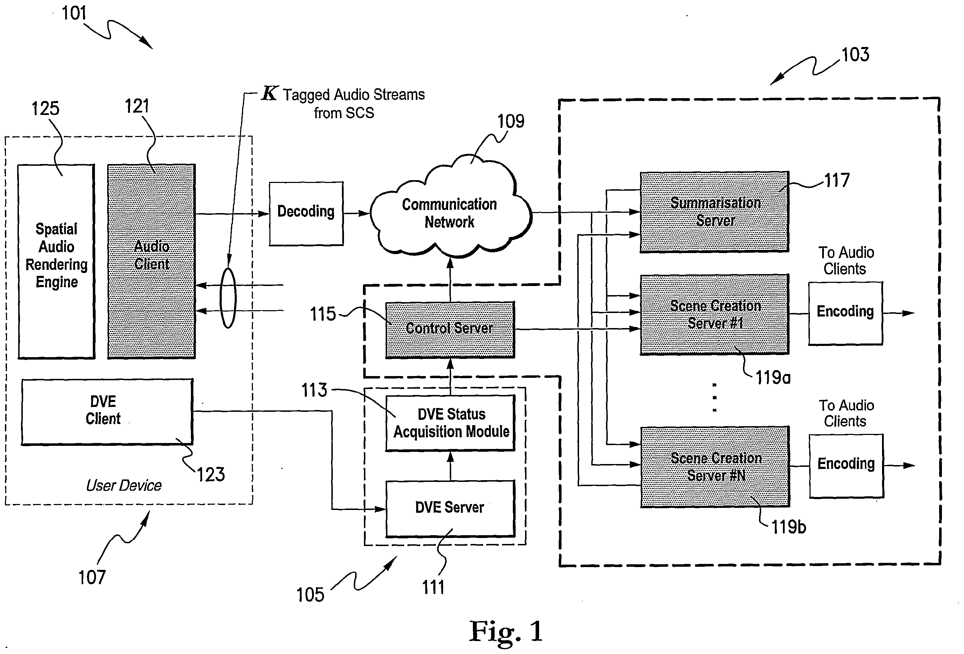

With reference to figure 1, which illustrates a system 101 embodying the present invention, the system 101 comprises: an audio scene creation system 103; a virtual environment state maintenance system 105; and a client computing device 107. The system 101 also comprises a communication network 109. The audio scene creation system 103, the virtual environment state maintenance system 105 and the client computing device 107 are connected to the communication network 109 and arranged to use the network 109 in order to operate in a distributed manner; that is, exchange information with each other via the communication network 109. The communication network 109 is in the form of a public access packet switched network such as the Internet, and is therefore made up of numerous interconnect routers (not shown in the figures).

Generally speaking, the virtual environment state maintenance system 105 is arranged to maintain dynamic state information pertaining to a virtual environment (such as a battlefield). The dynamic state information maintained by the system 105 includes, for example, the location of various avatars in the virtual environment and, where the virtual environment relates to a game, individual players' scores. The audio scene creation system 103 is basically arranged to create and manage the real-time audio related aspects of participants in the virtual environment (such as the participants voice); that is, create and manage audio scenes. The client computing device 107 is essentially arranged to interact with the virtual environment state maintenance system 105 and the audio scene creation system 103 to allow a person using the client computing device 107 to participate in the virtual environment.

More specifically, the graphical environment state maintenance system 105 is in the form of a computer server (or in an alternative embodiment, a plurality of distributed computer servers interconnected to each other) that comprises traditional computer hardware such as a motherboard, hard disk storage, and random access memory. In addition to the hardware the computer server also comprises an operating system (such as Linux or Microsoft Windows) that performs various system level operations (for example, memory management). The operating system also provides an environment for executing application software. In this regard, the computer server comprises an application package that is loaded on the hard disk storage and which is capable of maintaining the dynamic state information pertaining to the virtual environment. In this regard, if the virtual environment was, for example, a battlefield then the dynamic state information may indicate that a particular avatar (which, for example, represents a soldier) is situated in a tank. The virtual environment state maintenance system 105 essentially comprises two modules 111 and 113 in the form of software. The first of the modules 111 is essentially responsible for sending and receiving the dynamic state information (pertaining to the virtual environment) to/from the client computing device 107. The second of modules 113 is arranged to send the dynamic state information to the audio scene creation system 103.

As mentioned previously, the audio scene creation system 103 is basically arranged to create and manage audio scenes. Each audio scene basically represents a realistic reproduction of the sounds that would be heard by an avatar in the virtual environment. In order to create the audio scenes, the audio scene creation system 103 comprises a control server 115, a summarisation server 117 (alternative embodiments of the present invention may include a plurality of distributed summarisation servers), and a plurality of distributed scene creation servers 119. The control server 115, the summarisation server 117 and the plurality of distributed scene creation servers 119 are connected to the communication network 109 and use the communication network 109 to cooperate with each other in a distributed fashion.

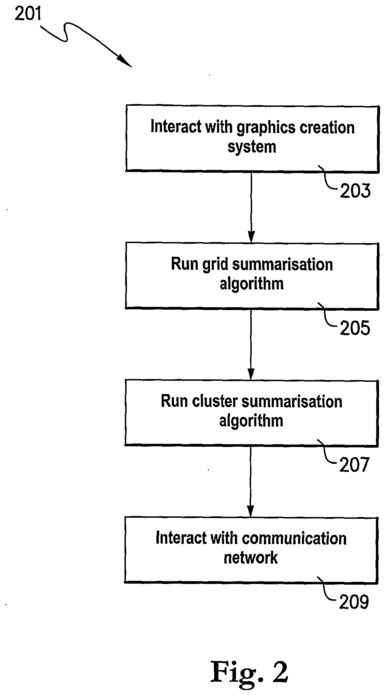

The control server 115 is in the form of a computer server that comprises traditional computer hardware such as a motherboard, hard disk storage, and random access memory. In addition to the hardware the computer server also comprises an operating system (such as Linux or Microsoft Windows) that performs various system level operations. The operating system also provides an environment for executing application software. In this regard, the computer server comprises application software that is loaded on the hard disk storage and which is arranged to carry out the various steps of the flow chart 201 shown in figure 2. The first step 203 that the application software performs is to interact with the virtual environment state maintenance system 105 to obtain the dynamic state information pertaining to the virtual environment. The application software obtains and processes the dynamic state information in order to identify the various avatars present in the virtual environment and the location of the avatars in the virtual environment. The virtual environment state maintenance system 105 can also process the dynamic state information to obtain details of the status of the avatars (for example, active or inactive) and details of any sound barriers. To obtain the dynamic state information the application software of the control server 115 interacts with the second of the modules 113 in the virtual environment state maintenance system 105 via the communication network 109.

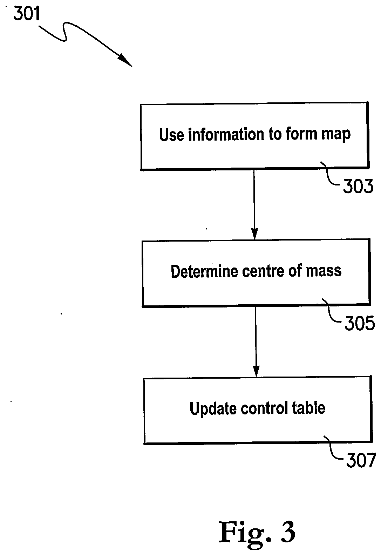

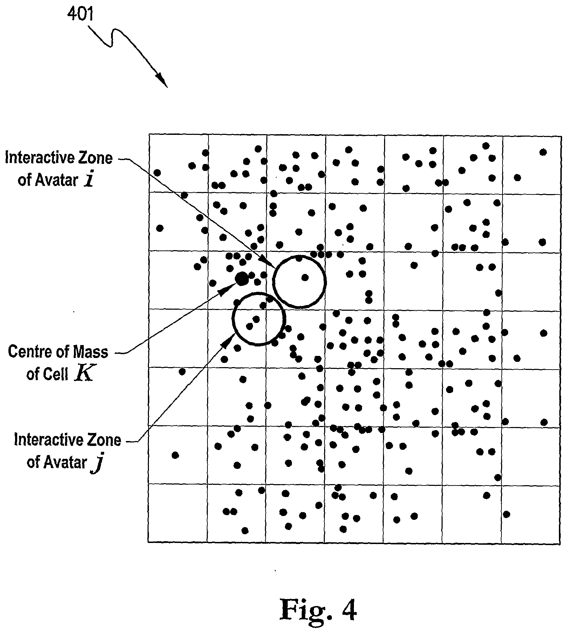

Once the application software of the control server 115 has obtained the dynamic state information from the virtual environment state maintenance system 105, it proceeds to process the dynamic state information in order to create a number of mixing operation that are processed by the summarisation server 117 and scene creation servers 119 in order to create audio scenes for each avatar in the virtual environment. Following on from the initial step 203 the control server 115 performs the step 205 of running a grid summarisation algorithm. With reference to figure 3, which shows a flow chart 301 of the grid summarisation algorithm, the first step 303 of the grid summarisation algorithm is to use the dynamic state information obtained during the initial step 203 to form a map 401, which can be seen in figure 4, of the virtual environment. The map 401 is divided into a plurality of cells and depicts the location of the avatars in the virtual environment. The map 401 depicts the avatars as the small black dots. Whilst the present embodiment includes only a single map 401, it is envisaged that multiple maps 401 could be employed in alternative embodiments of the present invention.

It is noted that each avatar in the virtual environment is considered to have a hearing range that is divided into an interactive zone and a background zone. The interactive zone is generally considered the section of the hearing range immediately surrounding the avatar, whilst the background zone is the section of the hearing range that is located around the periphery (outer limits) of the hearing range. As an example, the interactive zone of a hearing range of an avatar in shown in figure 4 as a circle surrounding the avatar.

In forming the map 401, the application software of the control server 115 ensures that the size of each cell is greater than or equal to the interactive zone of the avatars.

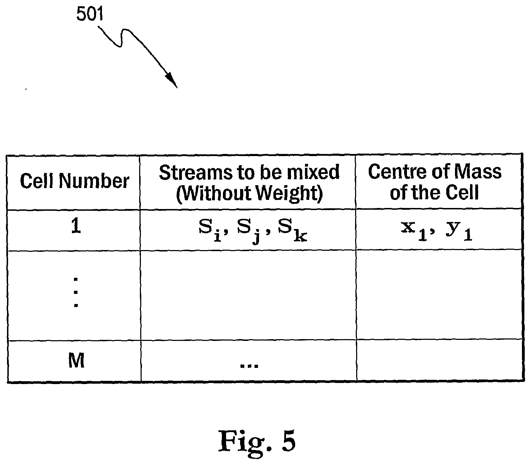

The next step 305 performed when carrying out the grid summarisation algorithm is to determine a 'centre of mass' of each of the cells in the map 401. The centre of mass is basically determined by identifying the point in each cell around which the avatars therein are centred. The centre of mass can be considered an approximate location of the avatars in the virtual environment. The final step 307 in the grid summarisation algorithm is to update a control table 501 (which is shown in figure 5) used by the summarisation server 117 based on the map 401. The control table 501 comprises a plurality of rows, each of which represents one of the cells in the map 401. Each row also contains an identifier of each avatar in the respective cell and the centre of mass thereof. Each row in the control table 501 can effectively be considered a unweighted mixing operation. In order to update the control table 501 the application software of the control server 115, interacts with the summarisation server 117 via the communication network 109.

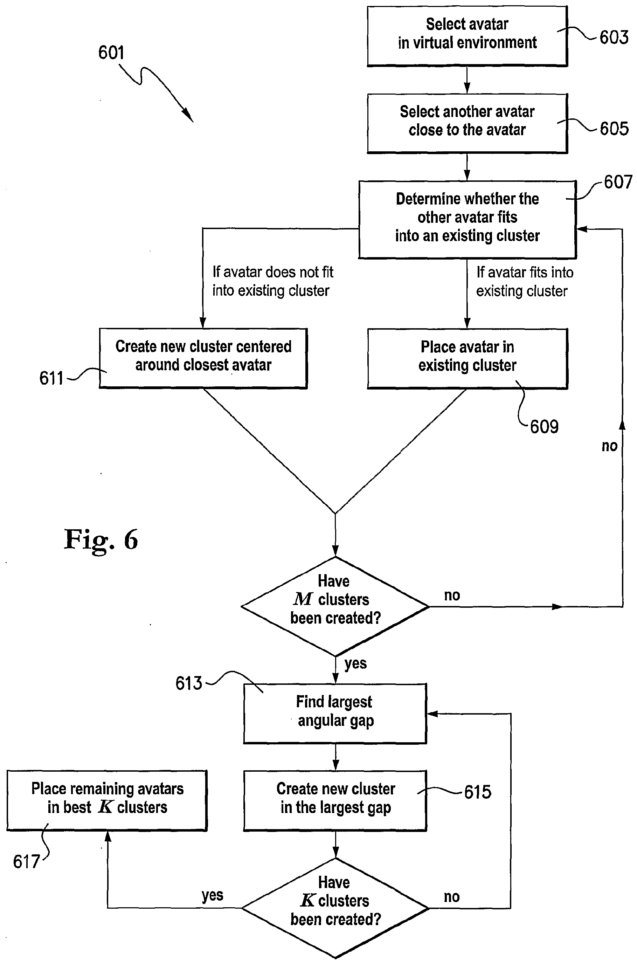

Once the application software of the control server 115 has completed the step 205 of running the grid summarisation algorithm, the next step 207 it performs is to run a cluster summarisation algorithm. Figure 6 provides a flow chart 601 of the various steps involved in the cluster summarisation algorithm. The first step 603 of the cluster summarisation algorithm is to select a first of the avatars in the virtual environment. Following on from the first step 603 the cluster summarisation algorithm involves the step 605 of selecting a second of the avatars that is closest to the first of the avatars, which was selected during the first step 603. Once the second of the avatars has been selected, the cluster summarisation algorithm involves the step 607 of determining whether the second of the avatars fits in to a previously defined cluster. Following on from the previous step 607 the cluster summarisation algorithm involves the step 609 of placing the second of the avatars in to the previously defined cluster if it fits therein. On the other hand if it is determined that the second of the avatars does not fit in to a previously defined cluster then the cluster summarisation algorithm involves carrying out the step 611 of establishing a new cluster that is centred around the second of the clusters. It is noted that the preceding steps 603 to 611 are performed until a predetermined number of clusters *M* are established.

Once the *M* clusters have been established, the cluster summarisation algorithm involves performing the step 613 of finding the largest angular gap between the *M* clusters. Once the largest angular gap has been determined the cluster summarisation algorithm involves the step 615 of establishing a new cluster in the largest angular gap. The previous steps 613 and 615 are repeated until a total of *K* clusters have been established. It is noted that the number of *M* clusters is ≤ the number of *K* clusters.

The final step 617 of the cluster summarisation algorithm involves placing all remaining avatars within the best of the *K* clusters, which are those clusters that result in the least angular error; that is, the angular difference between where a sound source is rendered from the perspective of the first of the avatars and the actual location of the sound source if the sound from the source was not summarised.

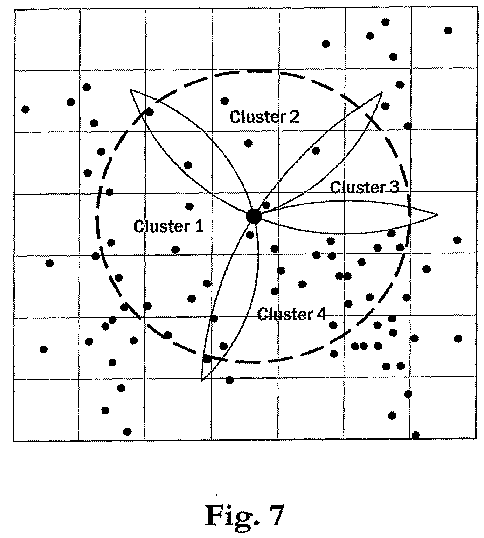

Once the steps 603 to 617 of the cluster summarisation algorithm have been performed the application software running on the control server 115 proceeds to carry out the last step 209, which is discussed in detail in subsequent paragraphs of this specification. An illustration of the clusters established using the cluster summarisation algorithm is shown in figure 7.

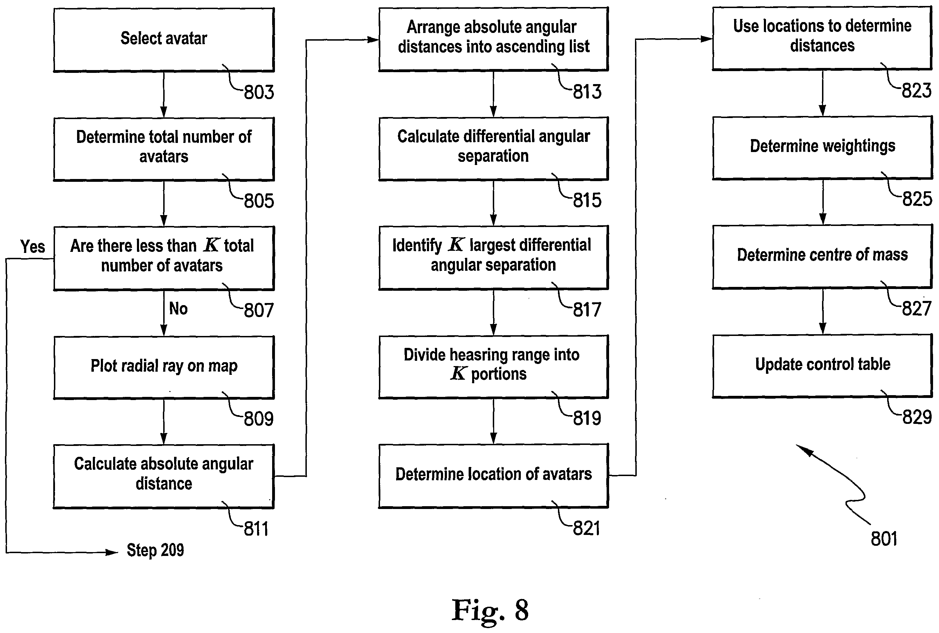

Persons skilled in the art will readily appreciate that the present invention is not limited to being used with the aforementioned clustering algorithm. By way of example, the following describes an alternative clustering algorithm that can be employed in another embodiment of the present invention. The flow chart 807 in figure 8 shows the steps involved in the alternative clustering algorithm.

The first step 803 of the alternative cluster summarisation algorithm is to select one of the avatars in the virtual environment. The next step 805 is to then determine the total number of avatars and grid summaries that are located in the hearing range of the avatar. The grid summaries are essentially unweighted audio streams produced by the summarisation server 117. A detailed description of this aspect of the summarisation server 117 is set out in subsequent paragraphs of this specification.

Following on from the previous step 805, the next step 807 is to assess whether the total number of avatars and grid summaries in the hearing range is less than or equal to *K*, which is a number selected based on the amount of bandwidth available for transmitting an audio scene. If it is determined that the total number of avatars and grid summaries is less than or equal to *K*, then the application software running on the control server 115 proceeds to the final step 209 of the algorithm (which is discussed in subsequent paragraphs of this specification).

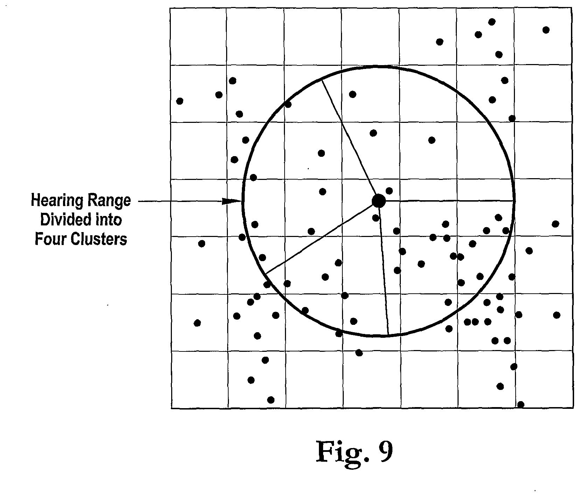

In the event that the total number of avatars and/or grid summaries in the hearing range is greater than *K*, the control server 115 continues to carry out the alternative cluster summarisation algorithm. In this situation the next step 809 in the alternative cluster summarisation algorithm is to effectively plot on the map 401 a radial ray that emanates from the avatar (selected during the previous step 803) and goes through any of the other avatars in the hearing range of the avatar. Subsequent to step 809, the next step 811 is to calculate the absolute angular distance of every avatar and grid summary in the hearing range of the avatar. Following on from step 811 the alternative clustering algorithm involves the step 813 of arranging the absolute angular distances in an ascending ordered list. The next step 815 is to calculate the differential angular separation of each two successive absolute angular distances in the ascending ordered list. Once the previous step 815 has been carried out, the next step 817 is to identify the *K* largest differential angular distances. The next step 819 is to divide the hearing range of the avatar into K portions by effectively forming radial rays between each of the avatars that are associated with the *K* highest differential angular distances. The area between the radial rays is referred to as a portion of the hearing range. Figure 9 depicts the effect of running the alternative cluster summarisation algorithm on the map 401.

As an example of the previous steps of the alternative cluster summarisation algorithm, consider a virtual environment comprising a total of 10 avatars/grid summaries, and a *K* that equals 4. Assume that the initial steps 811 and 813 of the alternative cluster summarisation algorithm result in the following list of absolute angular distances in ascending ordered:
0, 10, 16, 48, 67, 120, 143, 170, 222 and 253, which correspond respectively to avatars/grid summaries A₀ to A₉.

The subsequent step 815 of the alternative cluster summarisation algorithm which involves calculating the differential angular separation of each two successive absolute angular distances in the above list will result in the following:
10, 6, 32, 19, 53, 23, 27, 52, 31 and 107

The step 817 of the alternative cluster summarisation algorithm which involves identifying the *K* (4) largest differential angular distances will result in the following being selected:
107, 53, 52 and 32

The step 819 of the alternative cluster summarisation algorithm which involves dividing the hearing ranging into portions will result in the following *K* (4) clusters of avatars being defined:

| | |
|---|---|
| 1: | A₀, A₁ and A₃ |
| 2: | A₃ and A₄ |
| 3: | A₅, A₆ and A₇ |
| 4: | A₈ and A₉ |

Following on from the previous steps, the alternative cluster summarisation algorithm involves the step 821 of determining the locations of the avatars in the virtual environment. The application software running on the control server 115 does this by interacting with the second of the modules 113 in the virtual environment state maintenance system 105. Once the location of the avatars has be determined, the alternative cluster summarisation algorithm involves the step 823 of using the locations of the avatars to determine a distances between the avatars and the avatar for which the alternative cluster summarisation algorithm is being run. Subsequent to the step 823 the alternative cluster summarisation algorithm involves the step 825 of using the distances to determine a weighting to be applied to audio emanating from the avatars in the hearing range of the avatar. The step 825 also involves the step of using the centre of mass (determined from the grid summarisation algorithm) to determine a weighting for each of the grid summaries in the hearing range of the avatar.

At this stage, the alternative cluster summarisation algorithm involves the step 827 of determining a centre of mass for each of the portions of the hearing range identified during the previous step 819 of dividing up the hearing range. As with the grid summarisation algorithm, the alternative cluster summarisation algorithm determines the centre of mass by selecting a location in each of the portions around which the avatars are centred.

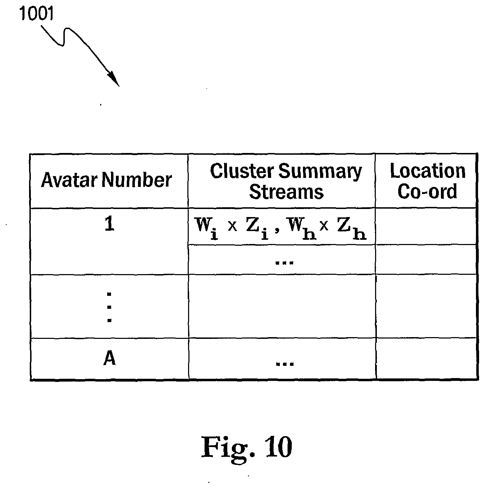

The final step 829 of the alternative cluster summarisation algorithm involves updating a control table 1001 (which is shown in figure 10) in the scene creation servers 119. This involves updating the control tables 1001 to include the identifier of each of the avatars in the portions of the hearing range, the weightings to be applied to the avatars in the portions, and the centre of mass of each of the portions. It is noted that the control server 115 updates the control table 1001 in the scene creation server 119 via the communication network 109.

As can be seen in figure 10, the control table 1001 in the scene creation servers 119 comprises a plurality of rows. Each of the rows corresponds to a portion of the hearing range of an avatar and contains the identifiers of the avatars/grid summaries (Sₕ and Zᵢ, respectively) in each portion of the hearing range. Each row of the control table 1001 also comprises the weighting to be applied to audio from the avatars/grid summaries (W), and the centre of mass of the portions, (which is contained in the "Location Coord" column of the control table 801). The centre of mass is in the form of x, y coordinates.

Upon completing the final step 829 of the alternative cluster summarisation algorithm, the application software running on the control server 115 proceeds to carry out its last step 209. The last step 209 involves interacting with the communication network 109 to establish specific communication links. The communication links are such that that they enable audio to be transferred from the client computing device 107 to the summarisation server 117 and/or the scene creation servers 119, and grid summaries (unweighted audio streams) to be transferred from the summarisation server 117 to the scene creation servers 119.

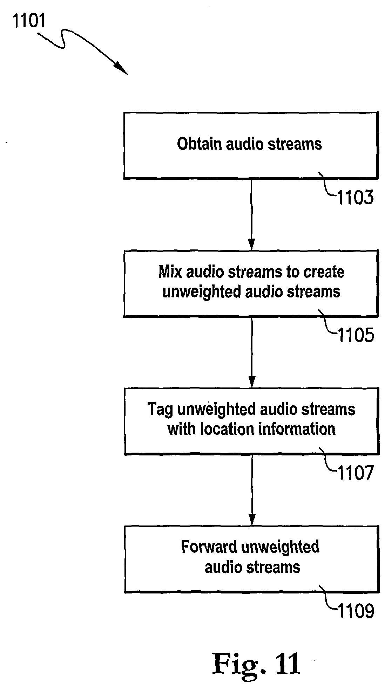

Once the control server 115 has completed the previous steps 203 to 209, the summarisation server 117 is in a position to create unweighted audio streams (grid summaries). The summarisation server 117 is in the form of a computer server that comprises traditional computer hardware such as a motherboard, hard disk storage means, and random access memory. In addition to the hardware the computer server also comprises an operating system (such as Linux or Microsoft Window) that performs various system level operations. The operating system also provides an environment for executing application software. In this regard, the computer server comprises application software that is arranged to carry out a mixing process, the steps of which are shown in the flow chart 1101 illustrated in figure 11, in order to create unweighted audio streams.

The first step 1103 of the flow chart 1101 is to obtain the audio streams Sₙ associated with each of the avatars identified in the "Streams to be mixed" column of the control table 501 in the summarisation server 117. The control table 501 being illustrated in figure 5. It is noted that the summarisation server 117 obtains the audio streams Sₙ via the communication network 109. In this regard, the previous step 209 of the control server 115 interacting with the communication network 109 established the necessary links in the communication network 109 to enable the summarisation server 117 to receive the audio streams Sₙ. Then for each row in the control table 501, the next step 1105 is to mix together the identified audio streams Sₙ, to thereby produce *M* mixed audio streams. Each of the *M* mixed audio streams comprises the audio streams Sₙ identified in the "Streams to be mixed" column of each of the *M* rows in the control table 501. When mixing the audio streams Sₙ during the mixing step 1105 each audio stream Sₙ is such that they have their original unaltered amplitude. The *M* mixed audio streams are therefore considered unweighted audio streams. As indicated previously, the unweighted audio streams contain audio from the avatars located in the cells of the map 401, which is shown in figure 4.

The next step 1107 in the flow chart 1101 is to tag the unweighted audio streams with the corresponding centre of mass of the respective cell in the map 401. This step 1107 effectively involves inserting the x, y coordinates from the "centre of mass of the cell" columns of the control table 501. The final step 1109 in the process 1101 is to forward the unweighted audio streams from the summarisation server 117 to the appropriate scene creation server 119, which is achieved by using the communication network 109 to transfer the unweighted audio streams from the summarisation server 117 to the scene creation server 119. The previous step 209 of the control server 115 interacting with the communication network 109 established the necessary links in the communication network 109 to enable the unweighted audio streams to be transferred from the summarisation server 117 to the scene creation server 119.

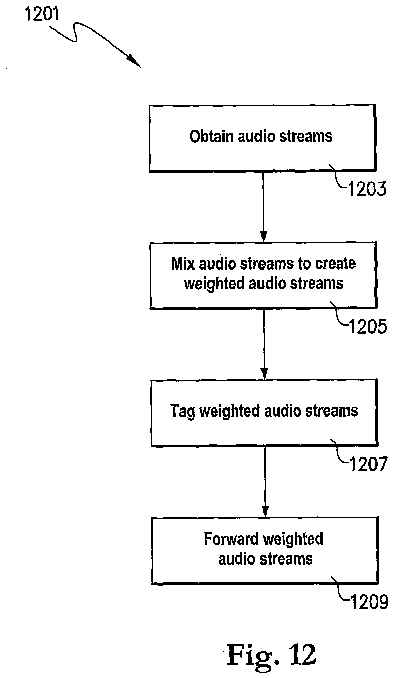

Once the unweighted audio streams have been transferred to the scene creation server 119 it is in a position to carry out a mixing process to create weighted audio streams. The steps involved in the mixing process are shown in the flow chart 1201 of figure 12. Each scene creation server 119 is in the form of a computer server that comprises traditional computer hardware such as a motherboard, hard disk storage means, and random access memory. In addition to the hardware the computer server also comprises an operating system (such as Linux or Microsoft Window) that performs various system level operations. The operating system also provides an environment for executing application software. In this regard, the computer server comprises application software that is arranged to carry out the various steps of the flow chart 1201.

The steps of the flow chart 1201 are essentially the same as the steps of the flow chart 1101 carried out by the summarisation server 117, except that instead of producing an unweighted audio stream the steps of the latter flow chart 1201 result in weighted audio streams being created. As can be seen in figure 12 the first step 1203 involves obtaining the audio streams Zᵢ and Sₙ identified in the control table 1001 of the scene creation server 119, where Zᵢ is an unweighted audio stream from the summarisation server 117 and Sₙ is an audio stream associated with a particular avatar. Then, for each row in the control table 1001, the flow chart 1201 involves the step 1205 of mixing the audio streams Zᵢ and Sₙ identified in the "Cluster summary streams" of the control table 1001, to thereby produce weighted audio streams. Each of the weighted audio streams comprises the audio streams Zᵢ and Sₙ identified in the corresponding row of the control table 1001. Unlike the unweighted audio streams created by the summarisation server 117, the amplitude of the audio streams Zᵢ and Sₙ in the weighted audio streams have different amplitudes. The amplitudes are determined during the mixing step 1205 by effectively multiplying the audio streams Zᵢ and Sₙ by their associated weightings Wₙ, which are also contained in the "Cluster summary streams" column of the control table 1001.

The next step 1207 in the flow chart 1201 is to tag the weighted audio streams with the center of mass contained in the corresponding "Location Coord" column of the control table 1001. This effectively involves inserting the x, y coordinates contained in the "Location Coord" column. The final step 1209 of the flow chart 1201 is to forward, via the communication network 109, the weighted audio streams to the client computing device 107 for processing.

The client computing device 107 is in the form of a personal computer comprising typical computer hardware such as a motherboard, hard disk and memory. In addition to the hardware, the client computing device 107 is loaded with an operating system (such as Microsoft Windows) that manages various system level operations and provides an environment in which application software can be executed. The client computing device 107 also comprises: an audio client 121; a virtual environemnt client 123; and a spatial audio rending engine 125. The audio client 121 is in the form of application software that is arranged to receive and process the weighted audio streams from the scene creation servers 119. The spatial audio rending engine 125 is in the form of audio rending software and soundcard. On receiving the weighted audio streams from the scene creation server 119, the audio client 121 interacts with the spatial audio rending engine 125 to render (reproduce) the weighted audio streams and thereby create an audio scene to the person using the client computing device 107. In this regard, the spatial audio rending engine 125 is connected to a set of speakers that are used to convey the audio scene to the person. It is noted that the audio client 121 extracts the location information inserted into the weighted audio stream by a scene creation server 119 during the previous step 1207 of tagging the weighted audio streams. The extracted location information is conveyed to the spatial audio rending engine 125 (along with the weighted audio streams), which in turn uses the location information to reproduce the information as if it was emanating from the location; that is, for example from the right hand side.

The virtual environment client 123 is in the form of software (and perhaps some dedicated image processing hardware in alternative embodiments) and is basically arranged to interact with the first of the modules 111 of the virtual environment state maintenance system 105 in order to obtain the dynamic state information pertaining to the virtual environment. On receiving the dynamic state information the graphics client 123 process the dynamic state information to reproduce (render) the the virtual environment. To enable the virtual environment to be displayed to the person using the client computing device 107, the client computing device 107 also comprises a monitor (not shown). The graphics client 123 is also arranged to provide the virtual environment state maintenance system 105 with dynamic information pertaining to the person's presence in the virtual environment.

## Claims

1. A system (103), comprising:
a plurality of scene creation servers (119a, 119b) for creating audio scenes for a corresponding plurality of avatars in a virtual environment, a scene creation server (119a) of the plurality of scene creation servers comprising:
an audio processor operable to create a weighted audio stream or an unweighted audio stream that comprises audio information from one or more objects located in a portion of a hearing range of the corresponding avatar;
associating means operable to associate the weighted audio stream or the unweighted audio stream with a datum that represents a location of the portion of the hearing range in the virtual environment, wherein the weighted audio stream or the unweighted audio stream and the datum represent the audio scene for the corresponding avatar;
a summarisation server (117) configured to:
- obtain dynamic state information pertaining to the virtual environment,
- select a particular avatar of the plurality of avatars,
- form (303) a map (401) of the virtual environment using the dynamic state information, the map being divided into a plurality of cells and depicting a location of the avatars in the virtual environment, the dynamic state information comprising identity and locations of each avatar in the virtual environment, each cell corresponding to a portion of the hearing range, **Characterised by** being configured to
- determine (305) a centre of mass for each cell around which the avatars are centered therein, the centre of mass representing an approximate location of the avatars in the virtual environment,
- assign each center of mass to one of one or more clusters of avatars, the clusters being angularly distributed around the selected avatar;
wherein the scene creation servers (119a, 119b) and the summarization server are configured to communicate between each other and with a client device for enabling transfer of the audio information from the client device to the scene creation servers and/or the summarisation server, and for enabling transfer of the audio streams in the clusters from the summarisation server to the scene creation servers.

2. The system as claimed in claim 1, wherein the audio processor is further operable to create the weighted audio stream such that it comprises an unweighted audio stream that comprises audio from another object located in the portion of the hearing range of the avatar.

3. The system as claimed in claim 1 or 2, wherein the audio processor is operable to create the weighted audio stream in accordance with a predetermined mixing operation, the predetermined mixing operation comprising identification information that identifies the object and/or the other objects, and weighting information that can be used by the audio processor to set an amplitude of the audio and unweighted audio stream in the weighted audio stream.

4. The system as claimed in claim 3, wherein the scene creation server further comprises a communication means operable to receive the audio information, the unweighted audio stream and the mixing operation via a communication network, the communication network also being operable to send the weighted audio stream and the datum via the communication network.

5. The system as claimed in claim 1, wherein the audio processor is operable to create the unweighted audio stream in accordance with a predetermined mixing operation, the predetermined mixing operation comprising identification information that identifies the object.

6. The system as claimed in claim 5, wherein the scene creation server further comprises a communication means operable to receive the audio and the predetermined mixing operation via a communication network, the communication network also being operable to send the unweighted audio stream and the datum via the communication network.

7. The system as claimed in claim 1, the scene creation server further comprising a communication means operable to send, via a communication network, the identifier, a weighting to be applied to the audio information from the object and the location of the avatar to one of a plurality of systems for processing.

8. The system as claimed in claim 7, wherein the communication means is further operable to create routing information for the communication network, wherein the routing information is such that it can be used by the communication network to route the audio information to the one of the plurality of system for processing.

9. The system as claim in any one of claims 7 to 8, wherein the audio processor is operable to respectively determine the identifier, the weighting and the location of the avatar by processing a representation of the virtual environment.

10. The system as claimed in any one of claims 7 to 9, wherein the summarisation server is operable to determine the portion of the hearing range by:
selecting a first of a plurality of avatars in the virtual environment;
identifying a second of the plurality of avatars that is proximate the first of the avatars;
determining whether the second of the avatars can be included in an existing cluster;
including the second of the avatars in the existing cluster upon determining that it can be included therein;
creating a new cluster that includes the second of the avatars upon determining that the second of the avatars cannot be included in the existing cluster to thereby create a plurality of clusters;
determining an angular gap between two of the clusters;
creating a further cluster that is located in the angular gap; and including at least one of the avatars in the further cluster.

11. The system as claimed in any one of claims 7 to 10, wherein the summarisation server is operable to determine the portion of the hearing range by:
selecting one of a plurality of avatars in the virtual environment;
determining a radial ray that extends from the avatar to the one of the plurality of avatars;
calculating the absolute angular distance that each of the plurality of avatars is from the radial ray;
arranging the absolute angular distance of each of the avatars into an ascending ordered list;
calculating a differential angular separation between successive ones of the absolute angular distance in the ascending ordered list; and
selecting at least one of the differential
angular separation that has a higher value than another differential angular separation; and
determining another radial ray that emanates from the avatar and which bisects two of the avatars that are associated with the differential angular separation.

12. A method of enabling a system (103) to create an audio scene for an avatar in a virtual environment, the system comprising a plurality of scene creation servers (119a, 119b) for creating audio scenes for a corresponding plurality of avatars in a virtual environment, a scene creation server of the plurality of scene creation servers comprising an audio processor and associating means, the method comprising the steps of:
by the audio processor, creating a weighted audio stream or unweighted audio stream that comprises audio information from one or more objects located in a portion of a hearing range of the corresponding avatar;
by the associating means, associating the weighted audio stream or the unweighted audio stream with a datum that represents a location of the portion of the hearing range in the virtual environment, wherein the weighted audio stream or the unweighted audio stream and the datum represent the audio scene for the corresponding avatar;
by the summarisation server, obtaining dynamic state information, the dynamic state information comprising identity and locations of each avatar in the virtual environment,
by the summarisation server, selecting a particular avatar of the plurality of avatars,
by the summarsation server, forming a map (401) of the virtual enviroment using the dynamic state information, the map being divided into a plurality of cells and depicting a location of the avatars in the virtual environment, each cell corresponding to a portion of the hearing range; and being **characterised by** the summarisation server, determining (305) for each cell a centre of mass around which the avatars are centered therein, the centre of mass representing an approximate location of the avatars in the virtual environment,
by the summarization server, assigning each centre of mass to one of one or more clusters of avatars, the clusters being angularly distributed around the selected avatar;
enabling transfer of the audio information from a client device to the scene creation servers and/or the summarization server; and
enabling transfer of the audio streams in the clusters from the summarization server to the scene creation server.

13. The method as claimed in claim 12, wherein the step of creating the weighted audio stream is such that the weighted audio stream comprises an unweighted audio stream that comprises audio from another object located in the portion of the hearing range of the avatar.

14. A computer program product comprising at least one instruction for causing a computing device to carry out the method defined in any one of claims 12 or 13.

15. A computer readable medium comprising the computer program product defined in claim 14.

## Patentansprüche

1. System (103), umfassend:
eine Vielzahl von Szenenerstellungsservern (119a, 119b) zum Erstellen von Audioszenen für eine entsprechende Vielzahl von Avatars in einer virtuellen Umgebung, wobei ein Szenenerstellungsserver (119a) der Vielzahl von Szenenerstellungsservern Folgendes umfasst:
einen Audioprozessor, der betriebsfähig ist, einen gewichteten Audiostream oder einen ungewichteten Audiostream zu erstellen, der Audioinformationen von einem oder mehreren Objekten umfasst, die sich in einem Teil einem Hörbereichs des entsprechenden Avatars befinden;
Verknüpfungsmittel, die betriebsfähig sind, den gewichteten Audiostream oder den ungewichteten Audiostream mit einem Bezugspunkt zu verknüpfen, der einen Standort des Teils des Hörbereichs in der virtuellen Umgebung darstellt, wobei der gewichtete Audiostream oder der ungewichtete Audiostream und der Bezugspunkt die Audioszene für den entsprechenden Avatar darstellen;
einen Summierungsserver (117), der konfiguriert ist zum:
- Erzielen von dynamischen Zustandsinformationen bezüglich der virtuellen Umgebung,
- Auswählen eines bestimmten Avatars der Vielzahl von Avatars,
- Bilden (303) einer Karte (401) der virtuellen Umgebung unter Verwendung der dynamischen Zustandsinformationen, wobei die Karte in eine Vielzahl von Zellen unterteilt ist und einen Standort der Avatars in der virtuellen Umgebung abbildet, wobei die dynamischen Zustandsinformationen Identität und Standorte jedes Avatars in der virtuellen Umgebung umfassen, wobei jede Zelle einem Teil des Hörbereichs entspricht,
**dadurch gekennzeichnet, dass** es konfiguriert ist zum
- Bestimmen (305) eines Massenmittelpunkts für jede Zelle, um den die Avatars darin zentriert sind, wobei der Massenmittelpunkt einen ungefähren Standort der Avatars in der virtuellen Umgebung darstellt,
- Zuordnen jedes Massenmittelpunkts zu einer von einer oder mehreren Gruppen von Avatars, wobei die Gruppen winkelmäßig um den ausgewählten Avatar herum verteilt sind;
wobei die Szenenerstellungsserver (119a, 119b) und der Summierungsserver konfiguriert sind, um miteinander und mit einer Client-Vorrichtung zu kommunizieren, um die Übertragung der Audioinformationen von der Client-Vorrichtung an die Szenenerstellungsserver und/oder den Summierungsserver zu ermöglichen, und um die Übertragung der Audiostreams in den Gruppen von dem Summierungsserver an die Szenenerstellungsserver zu ermöglichen.

2. System nach Anspruch 1, wobei der Audioprozessor ferner betriebsfähig ist, um den gewichteten Audiostream derart zu erstellen, dass er einen ungewichteten Audiostream umfasst, der Audiomaterial von einem anderen Objekt umfasst, dass sich in dem Teil des Hörbereichs des Avatars befindet.

3. System nach Anspruch 1 oder 2, wobei der Audioprozessor betriebsfähig ist, den gewichteten Audiostream gemäß einem vorbestimmten Mischvorgang zu erstellen, wobei der vorbestimmte Mischvorgang Identifizierungsinformationen, die das Objekt und/oder die anderen Objekte identifizieren, und Gewichtungsinformationen, die von dem Audioprozessor verwendet werden können, um eine Amplitude des Audiomaterials und des ungewichteten Audiostreams in dem gewichteten Audiostream einzustellen, umfasst.

4. System nach Anspruch 3, wobei der Szenenerstellungsserver ferner ein Kommunikationsmittel umfasst, das betriebsfähig ist, die Audioinformationen, den ungewichteten Audiostream und den Mischvorgang über ein Kommunikationsnetzwerk zu empfangen, wobei das Kommunikationsnetzwerk auch betriebsfähig ist, den gewichteten Audiostream und den Bezugspunkt über das Kommunikationsnetzwerk zu senden.

5. System nach Anspruch 1, wobei der Audioprozessor betriebsfähig ist, den ungewichteten Audiostream gemäß einem vorbestimmten Mischvorgang zu erstellen, wobei der vorbestimmte Mischvorgang Identifizierungsinformationen umfasst, die das Objekt identifizieren.

6. System nach Anspruch 5, wobei der Szenenerstellungsserver ferner ein Kommunikationsmittel umfasst, das betriebsfähig ist, das Audiomaterial und den vorbestimmten Mischvorgang über ein Kommunikationsnetzwerk zu empfangen, wobei das Kommunikationsnetzwerk auch betriebsfähig ist, den ungewichteten Audiostream und den Bezugspunkt über das Kommunikationsnetzwerk zu senden.

7. System nach Anspruch 1, wobei der Szenenerstellungsserver ferner ein Kommunikationsmittel umfasst, das betriebsfähig ist, über ein Kommunikationsnetzwerk die Kennung, eine Gewichtung, die auf die Audioinformationen von dem Objekt anzuwenden ist, und den Standort des Avatars an eines von einer Vielzahl von Systemen zur Verarbeitung zu senden.

8. System nach Anspruch 7, wobei das Kommunikationsmittel ferner betriebsfähig ist, Routing-Informationen für das Kommunikationsnetzwerk zu erstellen, wobei die Leitweginformationen derart sind, dass sie von dem Kommunikationsnetzwerk verwendet werden können, um die Audioinformationen zu einem der Vielzahl von Systemen zur Verarbeitung zu leiten.

9. System nach einem der Ansprüche 7 bis 8, wobei der Audioprozessor betriebsfähig ist, jeweils die Kennung, die Gewichtung und den Standort des Avatars durch Verarbeiten einer Darstellung der virtuellen Umgebung zu bestimmen.

10. System nach einem der Ansprüche 7 bis 9, wobei der Summierungsserver betriebsfähig ist, um den Teil des Hörbereichs zu bestimmen durch:
Auswählen eines ersten einer Vielzahl von Avatars in der virtuellen Umgebung;
Identifizieren eines zweiten der Vielzahl von Avatars, der sich in der Nähe des ersten der Avatars befindet;
Bestimmen, ob der zweite der Avatars in einer existierenden Gruppe einbezogen sein kann;
Einbeziehen des zweiten der Avatars in die existierende Gruppe beim Bestimmen, dass er darin einbezogen werden kann;
Erstellen einer neuen Gruppe, die den zweiten der Avatars umfasst, beim Bestimmen, dass der zweite der Avatars nicht in die existierende Gruppe einbezogen werden kann, um dadurch eine Vielzahl von Gruppen zu erstellen;
Bestimmen einer Winkellücke zwischen zweien der Gruppen;
Erstellen einer weiteren Gruppe, die sich in der Winkellücke befindet; und
Einbeziehen mindestens eines der Avatars in die weitere Gruppe.

11. System nach einem der Ansprüche 7 bis 10, wobei der Summierungsserver betriebsfähig ist, um den Teil des Hörbereichs zu bestimmen durch:
Auswählen eines von einer Vielzahl von Avatars in der virtuellen Umgebung;
Bestimmen eines radialen Strahls, der sich von dem Avatar zu dem einen der Vielzahl von Avatars erstreckt;
Berechnen der absoluten Winkelentfernung, in der sich jeder der Vielzahl von Avatars von dem radialen Strahl befindet;
Anordnen der absoluten Winkelentfernung jedes der Avatars in eine aufsteigend sortierte Liste;
Berechnen einer differentiellen Winkeltrennung zwischen aufeinanderfolgenden der absoluten Winkelentfernungen in der aufsteigend sortierten Liste; und
Auswählen mindestens einer der differentiellen Winkeltrennungen, die einen höheren Wert als eine andere differentielle Winkeltrennung aufweist; und
Bestimmen eines anderen radialen Strahls, der von dem Avatar ausgeht und zwei der Avatars halbiert, die mit der differentiellen Winkeltrennung verknüpft sind.

12. Verfahren, um es einem System (103) zu ermöglichen, eine Audioszene für einen Avatar in einer virtuellen Umgebung zu erstellen, wobei das System eine Vielzahl von Szenenerstellungsservern (119a, 119b) zum Erstellen von Audioszenen für eine entsprechende Vielzahl von Avatars in einer virtuellen Umgebung umfasst, wobei ein Szenenerstellungsserver der Vielzahl von Szenenerstellungsservern einen Audioprozessor und Verknüpfungsmittel umfasst, wobei das Verfahren folgende Schritte umfasst:
durch den Audioprozessor, Erstellen eines gewichteten Audiostreams oder eines ungewichteten Audiostreams, der Audioinformationen von einem oder mehreren Objekten umfasst, die sich in einem Teil eines Hörbereichs des entsprechenden Avatars befinden;
durch das Verknüpfungsmittel, Verknüpfen des gewichteten Audiostreams oder des ungewichteten Audiostreams mit einem Bezugspunkt, der einen Standort des Teils des Hörbereichs in der virtuellen Umgebung darstellt, wobei der gewichtete Audiostream oder der ungewichtete Audiostream und der Bezugspunkt die Audioszene für den entsprechenden Avatar darstellen;
durch den Summierungsserver, Erzielen von dynamischen Zustandsinformationen, wobei die dynamischen Zustandsinformationen Identität und Standorte jedes Avatars in der virtuellen Umgebung umfassen,
durch den Summierungsserver, Auswählen eines bestimmten Avatars der Vielzahl von Avatars,
durch den Summierungsserver, Bilden einer Karte (401) der virtuellen Umgebung unter Verwendung der dynamischen Zustandsinformationen, wobei die Karte in eine Vielzahl von Zellen unterteilt ist und einen Standort der Avatars in der virtuellen Umgebung darstellt, wobei jede Zelle einem Teil des Hörbereichs entspricht;
und **dadurch gekennzeichnet,**
**dass** der Summierungsserver für jede Zelle einen Massenmittelpunkt bestimmt (305), um den die Avatars herum zentriert sind, wobei der Massenmittelpunkt einen ungefähren Standort der Avatars in der virtuellen Umgebung darstellt,
**dass** der Summierungsserver jeden Massenmittelpunkt einer von einer oder mehreren Gruppen von Avatars zuordnet, wobei die Gruppen um den ausgewählten Avatar herum winkelmäßig verteilt sind;
Ermöglichen der Übertragung der Audioinformationen von einer Client-Vorrichtung an die Szenenerstellungsserver und/oder den Summierungsserver; und
Ermöglichen der Übertragung des Audiostreams in den Gruppen von dem Summierungsserver an den Szenenerstellungsserver.

13. Verfahren nach Anspruch 12, wobei der Schritt des Erstellens des gewichteten Audiostreams derart ist, dass der gewichtete Audiostream einen ungewichteten Audiostream umfasst, der Audiomaterial von einem anderen Objekt umfasst, das sich in dem Teil des Hörbereichs des Avatars befindet.

14. Computerprogrammprodukt, umfassend mindestens eine Anweisung, um zu bewirken, dass eine Computervorrichtung das Verfahren ausführt, das in einem der Ansprüche 12 oder 13 definiert ist.

15. Computerlesbares Medium, umfassend das Computerprogrammprodukt nach Anspruch 14.

## Revendications

1. Système (103), comprenant :
une pluralité de serveurs de création de scène (119a, 119b) pour créer des scènes audio pour une pluralité correspondante d'avatars dans un environnement virtuel, un serveur de création de scène (119a) de la pluralité de serveurs de création de scène comprenant :
un processeur audio pouvant fonctionner pour créer un flux audio pondéré ou un flux audio non pondéré qui comprend des informations audio provenant d'un ou plusieurs objets situés dans une partie d'une plage d'audition de l'avatar correspondant ;
un moyen d'association pouvant fonctionner pour associer le flux audio pondéré ou le flux audio non pondéré avec une donnée qui représente un emplacement de la partie de la plage d'audition dans l'environnement virtuel, dans lequel le flux audio pondéré ou le flux audio non pondéré et la donnée représentent la scène audio pour l'avatar correspondant ;
un serveur de synthèse (117) configuré pour :
- obtenir des informations d'état dynamique se rapportant à l'environnement virtuel,
- sélectionner un avatar particulier de la pluralité d'avatars,
- former (303) une carte (401) de l'environnement virtuel en utilisant les informations d'état dynamique, la carte étant divisée en une pluralité de cellules et illustrant un emplacement des avatars dans l'environnement virtuel, les informations d'état dynamique comprenant une identité et des emplacements de chaque avatar dans l'environnement virtuel, chaque cellule correspondant à une partie de la plage d'audition,
caractérisé en étant configuré pour
- déterminer (305) un centre de masse pour chaque cellule autour duquel les avatars sont centrés dans celui-ci, le centre de masse représentant un emplacement approximatif des avatars dans l'environnement virtuel,
- attribuer chaque centre de masse à un de un ou plusieurs groupes d'avatars, les groupes étant distribués angulairement autour de l'avatar sélectionné ;
dans lequel les serveurs de création de scène (119a, 119b) et le serveur de synthèse sont configurés pour communiquer les uns avec les autres et avec un dispositif client pour permettre le transfert des informations audio depuis le dispositif client vers les serveurs de création de scène et/ou le serveur de synthèse, et pour permettre le transfert des flux audio dans les groupes depuis le serveur de synthèse vers les serveurs de création de scène.

2. Système selon la revendication 1, dans lequel le processeur audio peut en outre fonctionner pour créer le flux audio pondéré de sorte qu'il comprend un flux audio non pondéré qui comprend un audio depuis un autre objet situé dans la partie de la plage d'audition de l'avatar.

3. Système selon la revendication 1 ou 2, dans lequel le processeur audio peut fonctionner pour créer le flux audio pondéré conformément à une opération de mélange prédéterminée, l'opération de mélange prédéterminée comprenant des informations d'identification qui identifient l'objet et/ou les autres objets, et des informations de pondération qui peuvent être utilisées par le processeur audio pour définir une amplitude de l'audio et du flux audio non pondéré dans le flux audio pondéré.

4. Système selon la revendication 3, dans lequel le serveur de création de scène comprend en outre un moyen de communication pouvant fonctionner pour recevoir les informations audio, le flux audio non pondéré et l'opération de mélange par l'intermédiaire d'un réseau de communication, le réseau de communication pouvant également fonctionner pour envoyer le flux audio pondéré et la donnée par l'intermédiaire du réseau de communication.

5. Système selon la revendication 1, dans lequel le processeur audio peut fonctionner pour créer le flux audio non pondéré conformément à une opération de mélange prédéterminée, l'opération de mélange prédéterminée comprenant des informations d'identification qui identifient l'objet.

6. Système selon la revendication 5, dans lequel le serveur de création de scène comprend en outre un moyen de communication pouvant fonctionner pour recevoir l'audio et l'opération de mélange prédéterminée par l'intermédiaire d'un réseau de communication, le réseau de communication pouvant également fonctionner pour envoyer le flux audio non pondéré et la donnée par l'intermédiaire du réseau de communication.

7. Système selon la revendication 1, le serveur de création de scène comprenant en outre un moyen de communication pouvant fonctionner pour envoyer, par l'intermédiaire d'un réseau de communication, l'identifiant, une pondération à appliquer aux informations audio provenant de l'objet et l'emplacement de l'avatar à un d'une pluralité de systèmes pour un traitement.

8. Système selon la revendication 7, dans lequel le moyen de communication peut en outre fonctionner pour créer des informations de routage pour le réseau de communication, dans lequel les informations de routage sont telles qu'elles peuvent être utilisées par le réseau de communication pour router les informations audio à l'un de la pluralité de systèmes pour un traitement.

9. Système selon l'une quelconque des revendications 7 à 8, dans lequel le processeur audio peut fonctionner pour déterminer respectivement l'identifiant, la pondération et l'emplacement de l'avatar en traitant une représentation de l'environnement virtuel.

10. Système selon l'une quelconque des revendications 7 à 9, dans lequel le serveur de synthèse peut fonctionner pour déterminer la partie de la plage d'audition en :
sélectionnant un premier d'une pluralité d'avatars dans l'environnement virtuel ;
identifiant un second de la pluralité d'avatars qui est à proximité du premier des avatars ;
déterminant si le second des avatars peut être inclus dans un groupe existant ;
incluant le second des avatars dans le groupe existant lors de la détermination qu'il peut être inclus dans celui-ci ;
créant un nouveau groupe qui inclut le second des avatars lors de la détermination que le second des avatars ne peut pas être inclus dans le groupe existant pour ainsi créer une pluralité de groupes ;
déterminant un écart angulaire entre deux des groupes ;
créant un groupe supplémentaire qui est situé dans l'écart angulaire ; et
incluant au moins un des avatars dans le groupe supplémentaire.

11. Système selon l'une quelconque des revendications 7 à 10, dans lequel le serveur de synthèse peut fonctionner pour déterminer la partie de la plage d'audition en :
sélectionnant un d'une pluralité d'avatars dans l'environnement virtuel ;
déterminant un rayon radial qui s'étend depuis l'avatar vers l'un de la pluralité d'avatars ;
calculant la distance angulaire absolue à laquelle chacun de la pluralité d'avatars se trouve du rayon radial ;
agençant la distance angulaire absolue de chacun des avatars en une liste par ordre croissant ;
calculant une séparation angulaire différentielle entre des unes successives de la distance angulaire absolue dans la liste par ordre croissant ; et
sélectionnant au moins une de la séparation angulaire différentielle qui présente une valeur supérieure à une autre séparation angulaire différentielle ; et
déterminant un autre rayon radial qui émane de l'avatar et qui divise deux des avatars qui sont associés à la séparation angulaire différentielle en deux.

12. Procédé qui permet à un système (103) de créer une scène audio pour un avatar dans un environnement virtuel, le système comprenant une pluralité de serveurs de création de scène (119a, 119b) pour créer des scènes audio pour une pluralité correspondante d'avatars dans un environnement virtuel, un serveur de création de scène de la pluralité de serveurs de création de scène comprenant un processeur audio et un moyen d'association, le procédé comprenant les étapes consistant à :
par le processeur audio, créer un flux audio pondéré ou un flux audio non pondéré qui comprend des informations audio provenant d'un ou plusieurs objets situés dans une partie d'une plage d'audition de l'avatar correspondant ;
par le moyen d'association, associer le flux audio pondéré ou le flux audio non pondéré avec une donnée qui représente un emplacement de la partie de la plage d'audition dans l'environnement virtuel, dans lequel le flux audio pondéré ou le flux audio non pondéré et la donnée représentent la scène audio pour l'avatar correspondant ;
par le serveur de synthèse, obtenir des informations d'état dynamique, les informations d'état dynamique comprenant une identité et des emplacements de chaque avatar dans l'environnement virtuel,
par le serveur de synthèse, sélectionner un avatar particulier de la pluralité d'avatars,
par le serveur de synthèse, former une carte (401) de l'environnement virtuel en utilisant les informations d'état dynamique, la carte étant divisée en une pluralité de cellules et illustrant un emplacement des avatars dans l'environnement virtuel, chaque cellule correspondant à une partie de la plage d'audition ;
et étant **caractérisé par** les étapes consistant à
par le serveur de synthèse, déterminer (305) pour chaque cellule un centre de masse autour duquel les avatars sont centrés dans celui-ci, le centre de masse représentant un emplacement approximatif des avatars dans l'environnement virtuel,
par le serveur de synthèse, attribuer chaque centre de masse à un de un ou plusieurs groupes d'avatars, les groupes étant distribués angulairement autour de l'avatar sélectionné ;
permettre le transfert des informations audio depuis un dispositif client vers les serveurs de création de scène et/ou le serveur de synthèse ; et
permettre le transfert des flux audio dans les groupes depuis le serveur de synthèse vers le serveur de création de scène.

13. Procédé selon la revendication 12, dans lequel l'étape consistant à créer le flux audio pondéré est telle que le flux audio pondéré comprend un flux audio non pondéré qui comprend un audio provenant d'un autre objet situé dans la partie de la plage d'audition de l'avatar.

14. Produit de programme informatique comprenant au moins une instruction pour amener un dispositif informatique à effectuer le procédé selon l'une quelconque des revendications 12 ou 13.

15. Support lisible par ordinateur comprenant le produit de programme informatique selon la revendication 14.
